# EUROPÄISCHE PATENTSCHRIFT

(11) **EP 1 108 642 B1**
(45) Veröffentlichungstag und Bekanntmachung des Hinweises auf die Patenterteilung: **28.01.2004**
(21) Anmeldenummer: 00124011.8
(22) Anmeldetag: 04.11.2000
(51) Int. Cl.: B62J 33/00, B62J 27/00

(54) **Halteeinrichtung**
Grab handle
Poignée de maintien

(30) Priorität: 18.12.1999 DE 19961310
(43) Veröffentlichungstag der Anmeldung: 20.06.2001
(73) Patentinhaber: Bayerische Motoren Werke Aktiengesellschaft, 80809 München (DE)
(72) Erfinder: Decker, Hubert, 84097 Herrngiersdorf (DE); Bleicher, Stephan, 84069 Schierling (DE)

(56) Entgegenhaltungen:
- DE-A- 3 344 582
- DE-A- 4 335 817
- US-A- 4 418 745

## Beschreibung

Die Erfindung betrifft eine Halteeinrichtung für einen hinter einem Motorradfahrer sitzenden Beifahrer.

Es sind bereits Halteeinrichtungen für Motorradbeifahrer bekannt. Die DE 43 35 817 A1 beschreibt einen Haltegriff, der in Fahrtrichtung gesehen vor dem Motorradfahrer angeordnet ist und das deutsche Gebrauchsmuster G 90 06 310 zeigt eine das Hinterrad eines Motorrads umfassende Gepäckeinheit, an der unter anderem Festhaltegriffe für den Beifahrer angeordnet sind.

Alle beschriebenen Beifahrerhalteeinrichtungen haben den Nachteil, daß die Hände des sich daran festhaltenden Beifahrers aufgrund mangelnder Bewegung unterkühlen, besonders bei Fahrten im Frühjahr und im Herbst, bei kaltem, nassem oder nasskaltem Wetter.

Deshalb ist es Aufgabe der Erfindung, Halteeinrichtungen für einen hinter einem Motorradfahrer sitzenden Beifahrer bereitzustellen, mit denen es möglich ist, eine Unterkühlung der Hände des Beifahrers zu vermeiden.

Die Aufgabe wird mit den Merkmalen des Anspruchs 1 gelöst. Weitere Ausgestaltungen der Erfindung ergeben sich aus den Unteransprüchen.

Nach der Erfindung sind die Halteeinrichtungen für den Beifahrer mindestens über einen Teilbereich von einer Heizeinrichtung beheizbar. Das hat den Vorteil, daß einer Unterkühlung der Hände des Beifahrers entgegengewirkt werden kann.

Bei einer vorteilhaften Ausführung der Erfindung ist die Heizeinrichtung der Halteeinrichtung durch elektrische Energie betreibbar. Vorteilhafterweise kann so das elektrische Bordsystem der Motorrads dazu benutzt werden, die Energie zum Erwärmen der Halteeinrichtung bereitzustellen.

Eine weitere vorteilhafte Ausführung der Erfindung sieht vor, daß die Heizeinrichtung integraler Bestandteil der Halteeinrichtung ist. Das hat den Vorteil, daß die Heizeinrichtung beim Motorraddesign bereits berücksichtigt werden kann und so auf einfache Weise ein gefälliges Aussehen der beheizbaren Halteeinrichtung erreicht werden kann.

Eine bevorzugte Ausführung der Erfindung ist dadurch gekennzeichnet, daß die Heizeinrichtung lösbar an der Halteeinrichtung angebracht ist. Vorteilhafterweise ist es so möglich, Nachrüstlösungen zum Beheizen von Halteeinrichtungen anzubieten und diese nachträglich mit einer Heizeinrichtung auszustatten.

Weitere bevorzugte Ausführungen der Erfindung sind dadurch gekennzeichnet, daß die Halteeinrichtung mindestens aus einem Haltegriff oder aus einer linken und einer rechten Armlehne für den Beifahrer besteht. Dies sind konventionelle Halteeinrichtungen für den Beifahrer am Motorrad. Vorteilhafterweise werden diese beheizt ausgeführt.

Zwei bevorzugte Ausführungsbeispiele der Erfindung beschreibt die nachfolgende Beschreibung mit der zugehörigen Zeichnung. Es zeigen:
- Figur 1:: Eine schematische Darstellung einer Halteeinrichtung für einen Beifahrer auf einem Motorrad gemäß der Erfindung,
- Figur 2:: einen Querschnitt an der Stelle A durch eine Halteeinrichtung aus einem Rohrprofil,
- Figur 3:: einen Querschnitt an der Stelle A durch die Halteeinrichtung entsprechend Figur 1 aus einem Vollprofil und
- Figur 4:: eine schematische Darstellung einer Halteeinrichtung als Nachrüstlösung gemäß der Erfindung.

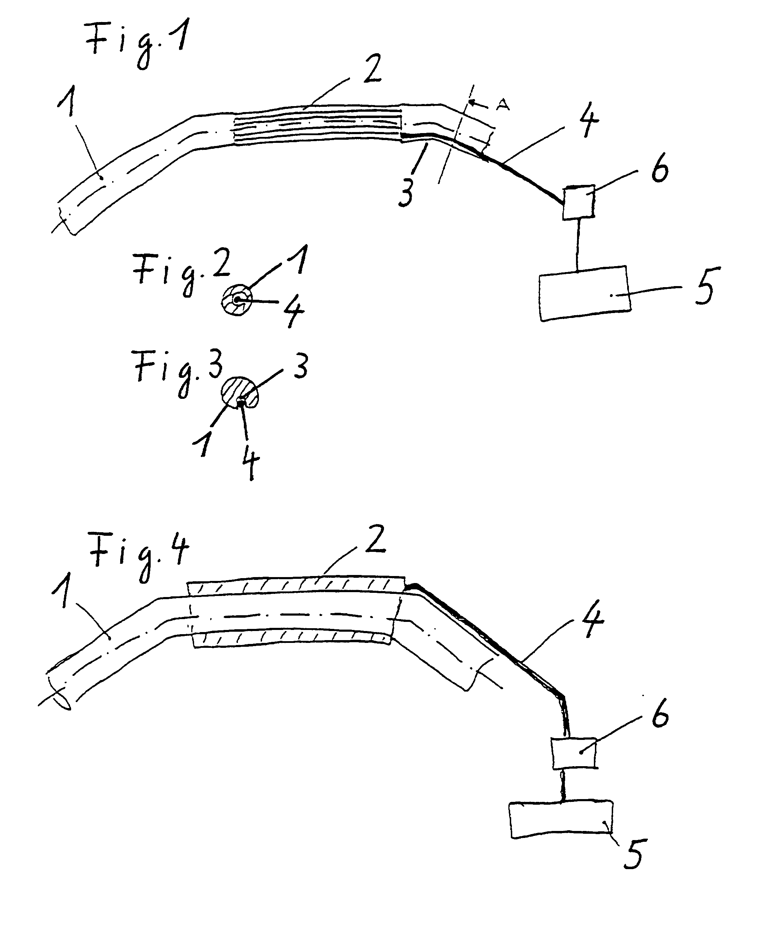

Figur 1 zeigt einen Ausschnitt aus einem Haltegriff 1, der mit nicht gezeichneten, konventionellen Befestigungsmitteln, wie zum Beispiel Schrauben, seitlich oder hinter einem nicht gezeichneten Beifahrersitz eines Motorrads anbringbar ist. Im Haltegriff 1 ist an der Stelle, an der sich ein nicht gezeichneter Beifahrer festhält, ein elektrisch betreibbares Heizelement 2 integriert eingebaut. In einer Nut 3 (Fig.3) gehalten, führt eine elektrische Anschlußleitung 4 von dem Heizelement 2 zu einer Spannungsversorgung 5. Zwischen Heizelement 2 und Spannungsversorgung 5 ist ein elektrischer Schalter 6 geschaltet, mit dem das Heizelement 2 vom Fahrer oder vom Beifahrer ein- bzw. ausgeschaltet werden kann.

Figur 2 zeigt einen Querschnitt an der Stelle A durch einen Haltegriff 1 aus einem Rohrprofil. Die elektrische Anschlußleitung 4 ist im Haltegriff 1 geführt.

Figur 3 zeigt einen Querschnitt an der Stelle A durch den Haltegriff 1 entsprechend Figur 1. In diesem Haltegriff 1 aus Vollprofil ist die elektrische Anschlußleitung 4 in einer Nut 3 geführt.

Figur 4 zeigt wiederum eine schematische Darstellung eines Haltegriffs 1. Dessen Heizeinrichtung ist als Nachrüstlösung ausgeführt, das heißt, daß die Heizeinrichtung so ausgebildet ist, daß sie nachträglich an einen konventionellen Haltegriff 1 anbaubar ist. Dazu wurde das Heizelement 2, als Manschette ausgebildet, auf den Haltegriff 1 aufgeschoben. Die elektrische Anschlußleitung 4 führt außerhalb des Haltegriffs 1 von dem Heizelement 2 zu der Spannungsversorgung 5. Zwischen Heizelement 2 und Spannungsversorgung 5 ist ebenfalls der elektrische Schalter 6 geschaltet, mit dem das Heizelement 2 vom Fahrer oder vom Beifahrer ein- bzw. ausgeschaltet werden kann.

## Patentansprüche

1. Halteeinrichtung für einen hinter einem Motorradfahrer sitzenden Beifahrer, **dadurch gekennzeichnet, daß** die Halteeinrichtung mindestens über einen Teilbereich eine Heizeinrichtung aufweist und von dieser beheizbar ist.

2. Halteeinrichtung nach Anspruch 1, **dadurch gekennzeichnet, daß** die Heizeinrichtung durch elektrische Energie betreibbar ist.

3. Halteeinrichtung nach einem der Ansprüche 1 oder 2, **dadurch gekennzeichnet, daß** die Heizeinrichtung integraler Bestandteil der Halteeinrichtung ist.

4. Halteeinrichtung nach einem der Ansprüche 1 oder 2, **dadurch gekennzeichnet, daß** die Heizeinrichtung lösbar an der Halteeinrichtung angebracht ist.

5. Halteeinrichtung nach einem der Ansprüche 1 bis 4, **dadurch gekennzeichnet, daß** die Halteeinrichtung mindestens ein Haltegriff (1) ist.

6. Halteeinrichtung nach einem der Ansprüche 1 bis 4, **dadurch gekennzeichnet, daß** die Halteeinrichtung mindestens aus einer linken und einer rechten Armlehne für den Beifahrer besteht.

## Claims

1. A device for retaining a passenger sitting behind a motorcyclist, **characterised in that** the retaining device is heatable by a heater which extends over at least part of it.

2. A retaining device according to claim 1, **characterised in that** the heater is operated by electricity.

3. A retaining device according to claim 1 or claim 2, **characterised in that** the heater is an integral part of the retaining device.

4. A retaining device according to claim 1 or claim 2, **characterised in that** the heater is releasably mounted on the retaining device.

5. A retaining device according to any of claims 1 to 4, **characterised in that** the retaining device is at least one handle (1).

6. A retaining device according to any of claims 1 to 4, **characterised in that** the retaining device comprises at least a left and a right arm rest for the passenger.

## Revendications

1. Dispositif de maintien pour un passager assis derrière le conducteur d'une motocyclette,
**caractérisé en ce que**
le dispositif de maintien présente un dispositif de chauffage au moins sur une région partielle et peut être chauffé par celui-ci.

2. Dispositif de maintien selon la revendication 1,
**caractérisé en ce que**
le dispositif de chauffage peut être activé par l'énergie électrique.

3. Dispositif de maintien selon l'une quelconque des revendications 1 ou 2,
**caractérisé en ce que**
le dispositif de chauffage fait partie intégrante du dispositif de maintien.

4. Dispositif de maintien selon l'une quelconque des revendications 1 ou 2,
**caractérisé en ce que**
le dispositif de chauffage est placé de façon démontable sur le dispositif de maintien.

5. Dispositif de maintien selon l'une quelconque des revendications 1 à 4,
**caractérisé en ce que**
le dispositif de maintien est au moins une poignée de maintien (1).

6. Dispositif de maintien selon l'une quelconque des revendications 1 à 4,
**caractérisé en ce que**
le dispositif de maintien se compose d'au moins un accoudoir gauche et un accoudoir droit pour le passager.
